# EUROPEAN PATENT APPLICATION

(11) **EP 4 707 030 A1**
(43) Date of publication of application: **11.03.2026**
(21) Application number: 25200518.6
(22) Date of filing: 05.09.2025
(51) Int. Cl.: B60L 1/00, B60L 3/12, B60L 15/20, B60L 58/12, B60L 58/14

(54) **WORKING VEHICLE**

(30) Priority: 09.09.2024 GB 202413207
(71) Applicant: JCB Access Limited, Uttoxeter, Staffordshire ST14 5JP (GB)
(72) Inventor: Kerrigan, Richard, Uttoxeter, ST14 5JP (GB); Bell, Sam, Uttoxeter, ST14 5JP (GB); Furniss, Chris, Uttoxeter, ST14 5JP (GB)
(74) Representative: McGeough, Gemma Ann

(57) **Abstract**

Aspects of the present invention relate to a working vehicle. The working vehicle comprises a ground-engaging propulsion structure, an electric traction motor for driving the ground-engaging propulsion structure, a battery for powering the electric traction motor, and a controller. The controller is configured to: a) determine whether the working vehicle is positioned on an uphill gradient; b) determine whether a state of charge of the battery is below a charge threshold; and c) when it is determined that the working vehicle is positioned on an uphill gradient and the state of charge is below the charge threshold, limit a power consumption of the electric traction motor to a restricted power consumption which is less than a maximum power consumption of the electric traction motor.

## Description

### FIELD

The present disclosure relates to a working vehicle, to a controller for a working vehicle, and to a method of controlling power consumption of an electric traction motor of a working vehicle.

### BACKGROUND

It is known to provide a working vehicle with a ground-engaging propulsion structure and a prime mover for driving the ground-engaging propulsion structure. Traditionally, the prime mover is an internal combustion engine. Internal combustion engines provide various benefits such as high power output and ease of refuelling, but are known to produce emissions which are harmful to the environment.

More recently, electric working vehicles have been developed in which the prime mover is an electric traction motor powered by a battery. Such electric working vehicles have lower emissions than traditional internal combustion engine-powered alternatives. However, the use of electric traction motors and batteries presents new challenges for management of electrical power consumption.

It is an aim of the present invention to address one or more of the disadvantages associated with the prior art.

### SUMMARY

The present teachings provide a working vehicle, a controller, and a method according to the appended claims.

An aspect of the teachings provides a working vehicle comprising: a ground-engaging propulsion structure; an electric traction motor for driving the ground-engaging propulsion structure; a battery for powering the electric traction motor; and a controller.

The controller may be configured to determine whether the working vehicle is positioned on an uphill gradient and, when it is determined that working vehicle is positioned on an uphill gradient, limit a power consumption of the electric traction motor to a restricted power consumption which is less than a maximum power consumption of the electric traction motor.

The controller may be configured to determine whether a state of charge of the battery is below a charge threshold, and when it is determined that the state of charge is below the charge threshold, limit a power consumption of the electric traction motor to a restricted power consumption which is less than a maximum power consumption of the electric traction motor.

The controller may be configured to:
a) determine whether the working vehicle is positioned on an uphill gradient;
b) determine whether a state of charge of the battery is below a charge threshold; and
c) when it is determined that the working vehicle is positioned on an uphill gradient and the state of charge is below the charge threshold, limit a power consumption of the electric traction motor to a restricted power consumption which is less than a maximum power consumption of the electric traction motor.

For example, at step c) the controller is configured to limit power input to the electric traction motor from the battery (e.g., via the controller) to a restricted power input level which is less than a maximum power input of the electric traction motor. For example, at step c) the controller is configured to de-rate the electric traction motor.

It will be understood that spikes and high levels of power consumption in the electric traction motor may cause dips in battery voltage level. When the state of charge of the battery is low, the battery voltage will already be lower, and any further dips in battery voltage level may lead to an undervoltage event which may cause the electric traction motor and/or controller and/or other electric circuitry to malfunction and/or shut down. It will also be understood that the electric traction motor is more likely to have high power consumption levels which could lead to such an undervoltage event when travelling uphill.

Therefore, by limiting power consumption of the electric traction motor when the working vehicle is positioned on an uphill gradient and state of charge is below a charge threshold, the likelihood of such an undervoltage event occurring is reduced. This may protect the electric traction motor and/or controller and/or other electric circuitry from damage, as well as lead to a more reliable operation of the working vehicle on uphill gradients.

Optionally, the controller is configured to limit a speed demand of the working vehicle to a restricted speed demand which is less than a maximum speed demand in order to restrict the power consumption of the electric traction motor.

This provides a simple means of restricting power consumption. For example, travelling of working vehicles is often controlled by setting a desired speed and then using feedback control to achieve the desired speed, rather than directly setting a motor power consumption level. In this way, the controller can limit power consumption of the electric traction motor using normal outputs from the controller, rather than having to add additional outputs from the controller.

Optionally, the speed demand is indicative of a desired rotation speed of the electric traction motor and/or a desired travelling speed of the working vehicle.

Optionally, the restricted speed demand is in a range of about 10% to about 90% of the maximum speed demand.

Optionally, the controller is configured to decrease the restricted speed demand as a tilt angle of the working vehicle increases. It will be understood that, at greater tilt angles, greater power is required to move at a given speed and/or to accelerate to a given speed. Therefore, by decreasing the restricted speed demand as the tilt angle increases, undervoltage may be avoided across a range of tilt angles whilst avoiding over restriction of speed demand at lower tilt angles.

Optionally, the controller is configured to vary the restricted speed demand between a first speed limit when the tilt angle is at or above an upper tilt threshold, and a second speed limit when the tilt angle is at or above a lower tilt threshold. This provides a simple logic for decreasing the restricted speed demand as the tilt angle increases.

Optionally, the controller is configured to set no restriction on the speed demand when the tilt angle is below the lower tilt threshold. By setting no restriction on the speed demand when the tilt angle is below the lower tilt threshold, unnecessary restriction of the speed demand may be avoided.

Optionally, the first speed limit is in a range of about 10% to about 30% of the maximum speed demand. Such a first speed limit may be suitable for avoiding under voltage at the higher tilt angles.

Optionally, the second speed limit is in a range of about 60% to about 90% of the maximum speed demand. Such a second speed limit may be suitable for avoiding undervoltage at lower tilt angles without overly restricting the speed demand.

Optionally, the upper tilt threshold is in a range of about 15 degrees to about 30 degrees, optionally in a range of about 20 degrees to about 25 degrees. Such an upper tilt threshold represents the typical steepest gradients at which a working vehicle, such as a mobile elevated work platform, is used.

Optionally, the lower tilt threshold is in a range of about 0.5 degrees to about 10 degrees, optionally in a range of about 2 degrees to about 7 degrees. Such a lower tilt threshold represents the typical gradients at which power consumption is noticeably increased compared to flat surfaces.

Optionally, the controller is configured to gradually decrease the restricted speed demand as the tilt angle varies from the lower tilt threshold to the upper tilt threshold. For example, the restricted speed demand decreases gradually (e.g., linearly) from the second speed limit to the first speed limit.

This facilitates an appropriate level of restriction on the speed demand between the lower and upper tilt thresholds. For example, this facilitates a level of restriction which avoids under voltage without being overly restrictive at different tilt angles between the lower and upper tilt thresholds.

Optionally, the controller is configured to control the restricted speed demand to limit sudden changes in the speed demand. It will be understood that sudden changes in the speed demand may lead to spikes in acceleration and associated spikes in power consumption of the electric traction motor. Therefore, by controlling the restricted speed demand to limit sudden changes in the speed demand, such spikes in power consumption may be avoided.

For example, where the speed demand is based on a desired speed signal from a user-requested speed input, the controller may be configured to apply a low pass filter to the desired speed signal to smooth out step changes in speed demand.

Optionally, the controller is configured to decrease the restricted speed demand as the state of charge of the battery decreases. For example, as the state of charge of the battery drops further below the charge threshold, more restriction is placed on speed demand.

It will be understood that battery voltage will decrease as the state of charge decreases below the charge threshold. Therefore, the risk of battery voltage dipping to an undervoltage level at a given speed demand increases as the state of charge decreases further. By decreasing the restricted speed demand as the state of charge of the battery decreases below the charge threshold, The risk of an undervoltage event is reduced at lower state of charge levels.

Optionally, the controller is configured to set the restricted speed demand based on the state of charge of the battery and a tilt angle of the working vehicle. It will be understood that lower states of charge and higher tilt angles both increase the risk of battery voltage dipping below a required level. Therefore, by setting the restricted speed demand based on both of these properties, rather than just one property, the risk of an undervoltage event occurring is reduced.

Optionally, the controller is configured to set the restricted speed demand using a 2D function or a 2D lookup table. A 2D function or a 2D look up table provides a simple means of setting the restricted speed demand based on both state of charge and tilt angle values.

Optionally, the 2D function comprises a tilt component (e.g., a value between 0 and 100%) and a charge component (e.g. a value between 0 and 100%). Optionally, the tilt component and charge component are multiplied together to determine the restricted speed demand. Optionally, the tilt component is weighted before multiplying with the charge component. Optionally, the charge component is weighted before multiplying with the tilt component. Optionally, the tilt component and charge component are both weighted before multiplying together. Alternatively, a different mathematical function may be applied to the tilt component and charge component.

Optionally, the tilt component is set based on a function (e.g., a linear function) of the tilt angle.

Optionally, the charge component is set based on a function (e.g., a linear function) of the state of charge.

In some embodiments, the controller may directly set the restricted power consumption, or may set a restriction on another property instead of speed demand (e.g. acceleration) in order to limit power consumption. Directly setting the restricted power consumption may offer a more reliable means of avoiding an undervoltage event than alternatives.

Optionally, the restricted power consumption may be in a range of about 10% to about 90% of the maximum power consumption of the electric traction motor.

Optionally, the controller is configured to decrease the restricted power consumption as a tilt angle of the working vehicle increases.

Optionally, the controller is configured to vary the restricted power consumption between a first consumption limit when the tilt angle is at or above an upper tilt threshold, and a second consumption limit when the tilt angle is at or above a lower tilt threshold.

Optionally, the controller is configured to set no restriction on the power consumption of the electric motor when the tilt angle is below the lower tilt threshold.

Optionally, the first consumption limit is in a range of about 10% to about 30% of the maximum power consumption.

Optionally, the second consumption limit is in a range of about 60% to about 90% of the maximum power consumption.

Optionally, the upper tilt threshold is in a range of about 15 degrees to about 30 degrees, optionally in a range of about 20 degrees to about 25 degrees.

Optionally, the lower tilt threshold is in a range of about 0.5 degrees to about 10 degrees, optionally in a range of about 2 degrees to about 7 degrees.

Optionally, the controller is configured to gradually (e.g., linearly) decrease the restricted power consumption as the tilt angle varies from the lower tilt threshold to the upper tilt threshold. For example, the restricted power consumption decreases gradually (e.g. linearly) from the second consumption limit to the first consumption limit.

Optionally, the controller is configured to decrease the restricted power consumption as the state of charge of the battery decreases. For example, as the state of charge of the battery drops further below the charge threshold, more restriction is placed on power consumption of the electric traction motor.

Optionally, the controller is configured to set the restricted power consumption based on the state of charge of the battery and a tilt angle of the working vehicle; optionally, using a 2D function or a 2D lookup table.

Optionally, the 2D function comprises a tilt component (e.g., a value between 0 and 100%) and a charge component (e.g. a value between 0 and 100%). Optionally, the tilt component and charge component are multiplied together to determine the restricted power consumption. Optionally, the tilt component is weighted before multiplying with the charge component. Optionally, the charge component is weighted before multiplying with the tilt component. Optionally, the tilt component and charge component are both weighted before multiplying together. Alternatively, a different mathematical function may be applied to the tilt component and charge component. Optionally, the tilt component is set based on a function (e.g., a linear function) of the tilt angle. Optionally, the charge component is set based on a function (e.g., a linear function) of the state of charge.

Optionally, the charge threshold is in a range of about 20% to about 70% of a maximum state of charge of the battery; optionally, in a range of about 30% to about 60% of the maximum state of charge; optionally, in a range of about 40% to about 50% of the maximum state of charge. Such a charge threshold may offer a suitable level at which the restricted power consumption is applied. For example, this may avoid restriction of power consumption at high state of charge levels (e.g., over 70%) at which the likelihood of an undervoltage event is low. This may also ensure that restriction of power consumption is implemented sufficiently early enough (e.g., at least by 20% state of charge) to reduce the likelihood of an undervoltage event occurring.

Optionally, the working vehicle comprises a tilt sensor configured to provide a tilt signal to the controller indicative of a tilt angle of the working vehicle, wherein the controller is configured to determine that the working vehicle is positioned on an uphill gradient based on the tilt signal. This provides a simple means for determining whether the working vehicle is positioned on an uphill gradient.

Optionally, the controller is configured to determine that the working vehicle is positioned on an uphill gradient when the tilt angle is greater than a tilt threshold. This provides a simple means for determining whether the working vehicle is positioned on an uphill gradient.

Optionally, the tilt threshold is in a range of about 0.5 degrees to about 30 degrees, optionally in a range of about 4 degrees to about 22 degrees. Such a range of tilt thresholds is representative of a typical range of gradients at which a working vehicle, such as a mobile elevated work platform, may be operated.

Optionally, the controller is configured to filter the tilt signal provided by the tilt sensor to remove transient changes in the tilt signal caused by vibration, impact or acceleration of the working vehicle.

Optionally, the tilt sensor comprises an accelerometer. An accelerometer-based tilt sensor provides a simple means of determining absolute tilt angle relative to a horizontal ground surface (i.e., relative to a surface which is normal to the direction of gravity).

Optionally, the controller is configured to filter accelerometer data provided by the accelerometer to remove transient changes in the accelerometer data caused by vibration, impact or acceleration of the working vehicle. It will be understood that accelerometer data will be subject to noise caused by vibrations, impacts and acceleration as the working vehicle travels, particularly over uneven ground such as construction sites. Therefore, by filtering transient changes in the accelerometer data, a more accurate tilt angle can be determined.

Optionally, the tilt sensor comprises a vision system (e.g., camera and image processing device). This provides an alternative means of determining the tilt angle.

Optionally, the working vehicle comprises a memory containing a map of elevation data, and a positioning sensor (e.g., a GPS sensor) configured to indicate a position of the working vehicle on the map, wherein the controller is configured to determine that the working vehicle is positioned on an uphill gradient based on the position of the working vehicle and the elevation data. This provides an alternative means of determining that the working vehicle is positioned on an uphill gradient.

For example, the map may include a road map (for on-road driving of the working vehicle) or a 3D building information model (for off-road driving of the working vehicle). In this context, a 3D building information model will be understood to mean a map containing 3D spatial information about a building and the surrounding area.

Optionally, the working vehicle comprises a positioning sensor (e.g., a GPS sensor) and the controller is configured to determine that the working vehicle is positioned on an uphill gradient based on a change in elevation of the working vehicle over a given distance. This provides an alternative means of determining that the working vehicle is positioned on an uphill gradient.

Optionally, the controller is configured to monitor power consumption of the electric traction motor and to determine that the working vehicle is travelling on an uphill gradient based on the power consumption and speed and/or acceleration of the working vehicle. This provides an alternative means of determining that the working vehicle is positioned on an uphill gradient.

For example, when the working vehicle is travelling at a given speed on an uphill gradient, power consumption of the electric traction motor would be higher than when the working vehicle is travelling at the same speed on flat ground or a downhill gradient. This principle could be used to determine when the working vehicle is travelling on an uphill gradient based on the power consumption of the electric traction motor and the speed and/or acceleration of the working vehicle.

Optionally, the working vehicle comprises a manually-actuatable uphill drive mode input, wherein the controller is configured to determine that the working vehicle is positioned on an uphill gradient when the manually-actuatable uphill drive mode input is activated. For example, a user may be able to manually select the restricted power consumption mode to avoid an undervoltage event when travelling on an uphill gradient. This provides an alternative means of determining that the working vehicle is positioned on an uphill gradient.

Optionally, the working vehicle comprises a battery state of charge sensor configured to provide a battery charge signal to the controller indicative of the state of charge of the battery; optionally, wherein the battery state of charge sensor is configured to measure a voltage of the battery. This provides a simple means of determining the state of charge of the battery.

Optionally, the ground-engaging propulsion structure comprises one or more wheels or tracks.

Optionally, the working vehicle is a mobile elevated work platform. Mobile elevated work platforms (MEWPs) are not typically used at high travelling speeds on roads. For example, the speed of a mobile elevated work platform may be limited to 10 mph or less. Therefore, it may be more acceptable to a user of a MEWP for the power consumption and/or speed demand to be restricted on uphill gradients than for other working vehicles, such as telescopic handlers.

In addition, the amount of time during which actuators of a mobile elevated work platform (e.g., boom actuators) may be used during a given work period may also be lower than for other working vehicles such as excavators. Therefore, electric mobile elevated work platforms may have a smaller battery in comparison to other types of electric working vehicles and thus be more susceptible to undervoltage events. Therefore, the benefits outlined above may be particularly applicable to mobile elevated work platforms.

However, it will be understood that the working vehicle could be a different type of working vehicle such as a telescopic handler, an excavator, a site dumper, a backhoe loader, a bulldozer, or any other type of working vehicle.

The controller may directly control the supply of power from the battery to the electric traction motor. Alternatively, the controller may output a control signal to another component (e.g., a separate inverter) to control the supply of power from the battery to the electric traction motor.

A further aspect of the teachings provides a controller for a working vehicle.

The controller may be configured to determine whether the working vehicle is positioned on an uphill gradient and, when it is determined that working vehicle is positioned on an uphill gradient, limit a power consumption of an electric traction motor of the working vehicle to a restricted power consumption which is less than a maximum power consumption of the electric traction motor.

The controller may be configured to determine whether a state of charge of a battery of the working vehicle is below a charge threshold, and when it is determined that the state of charge is below the charge threshold, limit a power consumption of an electric traction motor of the working vehicle to a restricted power consumption which is less than a maximum power consumption of the electric traction motor.

The controller may be configured to:
a) determine whether the working vehicle is positioned on an uphill gradient;
b) determine whether a state of charge of a battery of the working vehicle is below a charge threshold; and
c) when it is determined that the working vehicle is positioned on an uphill gradient and the state of charge is below the charge threshold, limit a power consumption of an electric traction motor of the working vehicle to a restricted power consumption which is less than a maximum power consumption of the electric traction motor.

For example, at step c) the controller is configured to limit power input to the electric traction motor from the battery (e.g., via the controller) to a restricted power input level which is less than a maximum power of the electric traction motor. For example, at step c) the controller is configured to de-rate the electric traction motor.

It will be understood that spikes and high levels of power consumption in the electric traction motor may cause dips in battery voltage level. When the state of charge of the battery is low, the battery voltage will already be lower, and any further dips in battery voltage level may lead to an undervoltage event which may cause the electric traction motor and/or controller and/or other electric circuitry to malfunction and/or shut down. It will also be understood that the electric traction motor is more likely to have high power consumption levels which could lead to such an undervoltage event when travelling uphill.

Therefore, by limiting power consumption of the electric traction motor when the working vehicle is positioned on an uphill gradient and state of charge is below a charge threshold, the likelihood of such an undervoltage event occurring is reduced. This may protect the electric traction motor and/or controller and/or other electric circuitry from damage, as well as lead to a more reliable operation of the working vehicle on uphill gradients.

Optionally, the controller is configured to limit a speed demand of the working vehicle to a restricted speed demand which is less than a maximum speed demand in order to restrict the power consumption of the electric traction motor.

Optionally, the speed demand is indicative of a desired rotation speed of the electric traction motor and/or a desired travelling speed of the working vehicle.

Optionally, the restricted speed demand is in a range of about 10% to about 90% of the maximum speed demand.

Optionally, the controller is configured to decrease the restricted speed demand as a tilt angle of the working vehicle increases.

Optionally, the controller is configured to vary the restricted speed demand between a first speed limit when the tilt angle is at or above an upper tilt threshold, and a second speed limit when the tilt angle is at or above a lower tilt threshold.

Optionally, the controller is configured to set no restriction on the speed demand when the tilt angle is below the lower tilt threshold.

Optionally, the first speed limit is in a range of about 10% to about 30% of the maximum speed demand.

Optionally, the second speed limit is in a range of about 60% to about 90% of the maximum speed demand.

Optionally, the upper tilt threshold is in a range of about 15 degrees to about 30 degrees, optionally in a range of about 20 degrees to about 25 degrees.

Optionally, the lower tilt threshold is in a range of about 0.5 degrees to about 10 degrees, optionally in a range of about 2 degrees to about 7 degrees.

Optionally, the controller is configured to gradually decrease the restricted speed demand as the tilt angle varies from the lower tilt threshold to the upper tilt threshold. For example, the restricted speed demand decreases gradually (e.g., linearly) from the second speed limit to the first speed limit.

Optionally, the controller is configured to control the restricted speed demand to limit sudden changes in the speed demand. For example, where the speed demand is based on a desired speed signal from a user-requested speed input, the controller may be configured to apply a low pass filter to the desired speed signal to smooth out step changes in speed demand.

Optionally, the controller is configured to decrease the restricted speed demand as the state of charge of the battery decreases. For example, as the state of charge of the battery drops further below the charge threshold, more restriction is placed on speed demand.

Optionally, the controller is configured to set the restricted speed demand based on the state of charge of the battery and a tilt angle of the working vehicle.

Optionally, the controller is configured to set the restricted speed demand using a 2D function or a 2D lookup table.

Optionally, the 2D function comprises a tilt component (e.g., a value between 0 and 100%) and a charge component (e.g. a value between 0 and 100%). Optionally, the tilt component and charge component are multiplied together to determine the restricted speed demand. Optionally, the tilt component is weighted before multiplying with the charge component. Optionally, the charge component is weighted before multiplying with the tilt component. Optionally, the tilt component and charge component are both weighted before multiplying together. Alternatively, a different mathematical function may be applied to the tilt component and charge component.

Optionally, the tilt component is set based on a function (e.g., a linear function) of the tilt angle.

Optionally, the charge component is set based on a function (e.g., a linear function) of the state of charge.

In some embodiments, the controller may directly set the restricted power consumption, or may set a restriction on another property instead of speed demand (e.g. acceleration) in order to limit power consumption.

Optionally, the restricted power consumption may be in a range of about 10% to about 90% of the maximum power consumption of the electric traction motor.

Optionally, the controller is configured to decrease the restricted power consumption as a tilt angle of the working vehicle increases.

Optionally, the controller is configured to vary the restricted power consumption between a first consumption limit when the tilt angle is at or above an upper tilt threshold, and a second consumption limit when the tilt angle is at or above a lower tilt threshold.

Optionally, the controller is configured to set no restriction on the power consumption of the electric motor when the tilt angle is below the lower tilt threshold.

Optionally, the first consumption limit is in a range of about 10% to about 30% of the maximum power consumption.

Optionally, the second consumption limit is in a range of about 60% to about 90% of the maximum power consumption.

Optionally, the upper tilt threshold is in a range of about 15 degrees to about 30 degrees, optionally in a range of about 20 degrees to about 25 degrees.

Optionally, the lower tilt threshold is in a range of about 0.5 degrees to about 10 degrees, optionally in a range of about 2 degrees to about 7 degrees.

Optionally, the controller is configured to gradually (e.g., linearly) decrease the restricted power consumption as the tilt angle varies from the lower tilt threshold to the upper tilt threshold. For example, the restricted power consumption decreases gradually (e.g. linearly) from the second consumption limit to the first consumption limit.

Optionally, the controller is configured to decrease the restricted power consumption as the state of charge of the battery decreases. For example, as the state of charge of the battery drops further below the charge threshold, more restriction is placed on power consumption of the electric traction motor.

Optionally, the controller is configured to set the restricted power consumption based on the state of charge of the battery and a tilt angle of the working vehicle; optionally, using a 2D function or a 2D lookup table.

Optionally, the 2D function comprises a tilt component (e.g., a value between 0 and 100%) and a charge component (e.g. a value between 0 and 100%). Optionally, the tilt component and charge component are multiplied together to determine the restricted power consumption. Optionally, the tilt component is weighted before multiplying with the charge component. Optionally, the charge component is weighted before multiplying with the tilt component. Optionally, the tilt component and charge component are both weighted before multiplying together. Alternatively, a different mathematical function may be applied to the tilt component and charge component. Optionally, the tilt component is set based on a function (e.g., a linear function) of the tilt angle. Optionally, the charge component is set based on a function (e.g., a linear function) of the state of charge.

Optionally, the charge threshold is in a range of about 20% to about 70% of a maximum state of charge of the battery; optionally, in a range of about 30% to about 60% of the maximum state of charge; optionally, in a range of about 40% to about 50% of the maximum state of charge.

Optionally, the controller is configured to determine that the working vehicle is positioned on an uphill gradient based on a tilt signal from a tilt sensor of the working vehicle, the tilt signal being indicative of a tilt angle of the working vehicle.

Optionally, the controller is configured to determine that the working vehicle is positioned on an uphill gradient when the tilt angle is greater than a tilt threshold.

Optionally, the tilt threshold is in a range of about 0.5 degrees to about 30 degrees, optionally in a range of about 4 degrees to about 22 degrees.

Optionally, the controller is configured to filter the tilt signal provided by the tilt sensor to remove transient changes in the tilt signal caused by vibration, impact or acceleration of the working vehicle.

Optionally, the controller is configured to determine that the working vehicle is positioned on an uphill gradient based on a position of the working vehicle provided by a positioning sensor and a map of elevation data. For example, the map may include a road map (for on-road driving of the working vehicle) or a 3D building information model (for off-road driving of the working vehicle). In this context, a 3D building information model will be understood to mean a map containing 3D spatial information about a building and the surrounding area.

Optionally, the controller is configured to determine that the working vehicle is positioned on an uphill gradient based on a change in elevation of the working vehicle over a given distance (e.g., based on elevation data provided by a positioning sensor).

Optionally, the controller is configured to monitor power consumption of the electric traction motor and to determine that the working vehicle is travelling on an uphill gradient based on the power consumption and speed and/or acceleration of the working vehicle. For example, when the working vehicle is travelling at a given speed on an uphill gradient, power consumption of the electric traction motor would be higher than when the working vehicle is travelling at the same speed on flat ground or a downhill gradient. This principle could be used to determine when the working vehicle is travelling on an uphill gradient based on the power consumption of the electric traction motor and the speed and/or acceleration of the working vehicle.

Optionally, the controller is configured to determine that the working vehicle is positioned on an uphill gradient when a manually-actuatable uphill drive mode input of the working vehicle is activated. For example, a user may be able to manually select the restricted power consumption mode to avoid an undervoltage event when travelling on an uphill gradient.

Optionally, the controller is configured to determine the state of charge of the battery based on a battery charge signal provided by a battery charge sensor. Optionally, the battery charge signal comprises a voltage of the battery.

The controller may directly control the supply of power from the battery to the electric traction motor. Alternatively, the controller may output a control signal to another component (e.g., a separate inverter) to control the supply of power from the battery to the electric traction motor.

A further aspect of the teachings provides a method of controlling power consumption of an electric traction motor of a working vehicle.

The method may comprise determining whether the working vehicle is positioned on an uphill gradient and, when it is determined that working vehicle is positioned on an uphill gradient, limiting a power consumption of the electric traction motor to a restricted power consumption which is less than a maximum power consumption of the electric traction motor.

The method may comprise determining whether a state of charge of the battery is below a charge threshold, and when it is determined that the state of charge is below the charge threshold, limiting a power consumption of the electric traction motor to a restricted power consumption which is less than a maximum power consumption of the electric traction motor.

The method may comprise:
a) determining whether the working vehicle is positioned on an uphill gradient;
b) determining whether a state of charge of a battery of the working vehicle is below a charge threshold; and
c) when it is determined that the working vehicle is positioned on an uphill gradient and the state of charge is below the charge threshold, limiting a power consumption of the electric traction motor to a restricted power consumption which is less than a maximum power consumption of the electric traction motor.

For example, at step c) the method involves limiting power input to the electric traction motor from the battery (e.g., via the controller) to a restricted power input level which is less than a maximum power input of the electric traction motor. For example, at step c) the method involves de-rating the electric traction motor.

Optionally, the method comprises limiting a speed demand of the working vehicle to a restricted speed demand which is less than a maximum speed demand in order to restrict the power consumption of the electric traction motor.

Optionally, the speed demand is indicative of a desired rotation speed of the electric traction motor and/or a desired travelling speed of the working vehicle.

Optionally, the restricted speed demand is in a range of about 10% to about 90% of the maximum speed demand.

Optionally, the method comprises decreasing the restricted speed demand as a tilt angle of the working vehicle increases.

Optionally, the method comprises varying the restricted speed demand between a first speed limit when the tilt angle is at or above an upper tilt threshold, and a second speed limit when the tilt angle is at or above a lower tilt threshold.

Optionally, the method comprises setting no restriction on the speed demand when the tilt angle is below the lower tilt threshold.

Optionally, the first speed limit is in a range of about 10% to about 30% of the maximum speed demand.

Optionally, the second speed limit is in a range of about 60% to about 90% of the maximum speed demand.

Optionally, the upper tilt threshold is in a range of about 15 degrees to about 30 degrees, optionally in a range of about 20 degrees to about 25 degrees.

Optionally, the lower tilt threshold is in a range of about 0.5 degrees to about 10 degrees, optionally in a range of about 2 degrees to about 7 degrees.

Optionally, the method comprises gradually decreasing the restricted speed demand as the tilt angle varies from the lower tilt threshold to the upper tilt threshold. For example, the restricted speed demand decreases gradually (e.g., linearly) from the second speed limit to the first speed limit.

Optionally, the method comprises controlling the restricted speed demand to limit sudden changes in the speed demand. For example, where the speed demand is based on a desired speed signal from a user-requested speed input, the method may comprise applying a low pass filter to the desired speed signal to smooth out step changes in speed demand.

Optionally, the method comprises decreasing the restricted speed demand as the state of charge of the battery decreases. For example, as the state of charge of the battery drops further below the charge threshold, more restriction is placed on speed demand.

Optionally, the method comprises setting the restricted speed demand based on the state of charge of the battery and a tilt angle of the working vehicle.

Optionally, the method comprises setting the restricted speed demand using a 2D function or a 2D lookup table.

Optionally, the 2D function comprises a tilt component (e.g., a value between 0 and 100%) and a charge component (e.g. a value between 0 and 100%). Optionally, the tilt component and charge component are multiplied together to determine the restricted speed demand. Optionally, the tilt component is weighted before multiplying with the charge component. Optionally, the charge component is weighted before multiplying with the tilt component. Optionally, the tilt component and charge component are both weighted before multiplying together. Alternatively, a different mathematical function may be applied to the tilt component and charge component.

Optionally, the tilt component is set based on a function (e.g., a linear function) of the tilt angle.

Optionally, the charge component is set based on a function (e.g., a linear function) of the state of charge.

In some embodiments, the method may comprise directly setting the restricted power consumption, or setting a restriction on another property instead of speed demand (e.g. acceleration) in order to limit power consumption.

Optionally, the restricted power consumption may be in a range of about 10% to about 90% of the maximum power consumption of the electric traction motor.

Optionally, the method comprises decreasing the restricted power consumption as a tilt angle of the working vehicle increases.

Optionally, the method comprises varying the restricted power consumption between a first consumption limit when the tilt angle is at or above an upper tilt threshold, and a second consumption limit when the tilt angle is at or above a lower tilt threshold.

Optionally, the method comprises setting no restriction on the power consumption of the electric motor when the tilt angle is below the lower tilt threshold.

Optionally, the first consumption limit is in a range of about 10% to about 30% of the maximum power consumption.

Optionally, the second consumption limit is in a range of about 60% to about 90% of the maximum power consumption.

Optionally, the upper tilt threshold is in a range of about 15 degrees to about 30 degrees, optionally in a range of about 20 degrees to about 25 degrees.

Optionally, the lower tilt threshold is in a range of about 0.5 degrees to about 10 degrees, optionally in a range of about 2 degrees to about 7 degrees.

Optionally, the method comprises gradually (e.g., linearly) decreasing the restricted power consumption as the tilt angle varies from the lower tilt threshold to the upper tilt threshold. For example, the restricted power consumption decreases gradually (e.g. linearly) from the second consumption limit to the first consumption limit.

Optionally, the method comprises decreasing the restricted power consumption as the state of charge of the battery decreases. For example, as the state of charge of the battery drops further below the charge threshold, more restriction is placed on power consumption of the electric traction motor.

Optionally, the method comprises setting the restricted power consumption based on the state of charge of the battery and a tilt angle of the working vehicle; optionally, using a 2D function or a 2D lookup table.

Optionally, the 2D function comprises a tilt component (e.g., a value between 0 and 100%) and a charge component (e.g. a value between 0 and 100%). Optionally, the tilt component and charge component are multiplied together to determine the restricted power consumption. Optionally, the tilt component is weighted before multiplying with the charge component. Optionally, the charge component is weighted before multiplying with the tilt component. Optionally, the tilt component and charge component are both weighted before multiplying together. Alternatively, a different mathematical function may be applied to the tilt component and charge component. Optionally, the tilt component is set based on a function (e.g., a linear function) of the tilt angle. Optionally, the charge component is set based on a function (e.g., a linear function) of the state of charge.

Optionally, the charge threshold is in a range of about 20% to about 70% of a maximum state of charge of the battery; optionally, in a range of about 30% to about 60% of the maximum state of charge; optionally, in a range of about 40% to about 50% of the maximum state of charge.

Optionally, the method comprises determining that the working vehicle is positioned on an uphill gradient based on a tilt signal from a tilt sensor.

Optionally, the method comprises determining that the working vehicle is positioned on an uphill gradient when a tilt angle indicated by the tilt signal is greater than a tilt threshold.

Optionally, the tilt threshold is in a range of about 0.5 degrees to about 30 degrees, optionally in a range of about 4 degrees to about 22 degrees.

Optionally, the method comprises filtering the tilt signal provided by the tilt sensor to remove transient changes in the tilt signal caused by vibration, impact or acceleration of the working vehicle.

Optionally, the method comprises determining that the working vehicle is positioned on an uphill gradient based on a position of the working vehicle provided by a positioning sensor and a map of elevation data. For example, the map may include a road map (for on-road driving of the working vehicle) or a 3D building information model (for off-road driving of the working vehicle). In this context, a 3D building information model will be understood to mean a map containing 3D spatial information about a building and the surrounding area.

Optionally, the method comprises determining that the working vehicle is positioned on an uphill gradient based on a change in elevation of the working vehicle over a given distance (e.g., based on elevation data provided by a positioning sensor).

Optionally, the method comprises monitoring power consumption of the electric traction motor and determining that the working vehicle is travelling on an uphill gradient based on the power consumption and speed and/or acceleration of the working vehicle. For example, when the working vehicle is travelling at a given speed on an uphill gradient, power consumption of the electric traction motor would be higher than when the working vehicle is travelling at the same speed on flat ground or a downhill gradient. This principle could be used to determine when the working vehicle is travelling on an uphill gradient based on the power consumption of the electric traction motor and the speed and/or acceleration of the working vehicle.

Optionally, the working vehicle comprises a manually-actuatable uphill drive mode input, wherein the method comprises determining that the working vehicle is positioned on an uphill gradient when a manually-actuatable uphill drive mode input of the working vehicle is activated. For example, a user may be able to manually select the restricted power consumption mode to avoid an undervoltage event when travelling on an uphill gradient.

Optionally, the method comprises determining the state of charge of the battery based on a battery charge signal provided by a battery charge sensor. Optionally, the battery charge signal comprises a voltage of the battery.

The method may comprise directly controlling the supply of power from the battery to the electric traction motor. Alternatively, the method may comprise outputting a control signal to another component (e.g., a separate inverter) to control the supply of power from the battery to the electric traction motor.

### BRIEF DESCRIPTION OF DRAWINGS

Embodiments will now be described by way of example only with reference to the accompanying figures, in which:
Figure 1 is a right-side view of a working vehicle according to an embodiment of the invention;
Figure 2 is a left-side view of the working vehicle of Figure 1;
Figure 3 is a side view of the working vehicle of Figures 1 and 2 on different gradients;
Figure 4 is a schematic diagram of a controller and associated inputs and outputs of the working vehicles of Figures 1 and 2;
Figure 5 is a graph of a relationship between tilt angle and restricted speed demand of the working vehicle of Figures 1 and 2, as implemented by a controller according to an embodiment of the invention;
Figure 6 is a graph of a relationship between state of charge and restricted speed demand of the working vehicle of Figures 1 and 2, as implemented by a controller according to an embodiment of the invention;
Figure 7 is a 2D lookup table of restricted speed demand based on tilt angle and state of charge of the working vehicle of Figures 1 and 2, as implemented by a controller according to an embodiment of the invention;
Figure 8 is a flow chart of a method of controlling power consumption of an electric traction motor of a working vehicle, according to an embodiment of the invention.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition. The term axial is generally used in relation to the longitudinal axis of the machine. The term width is generally used in relation to the longitudinal length, that is, transverse to the length.

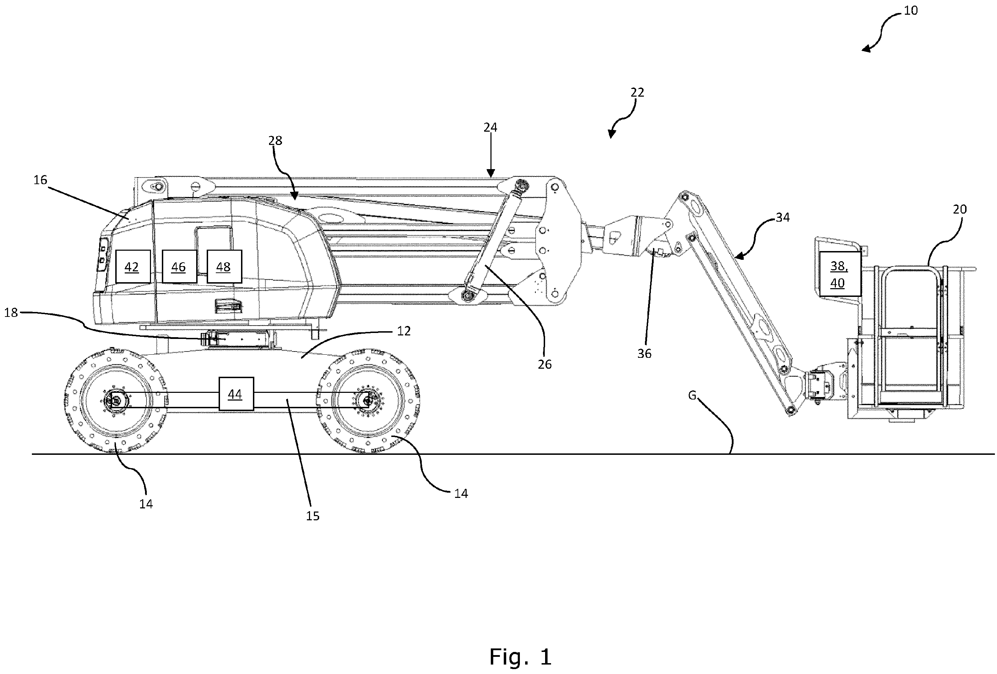

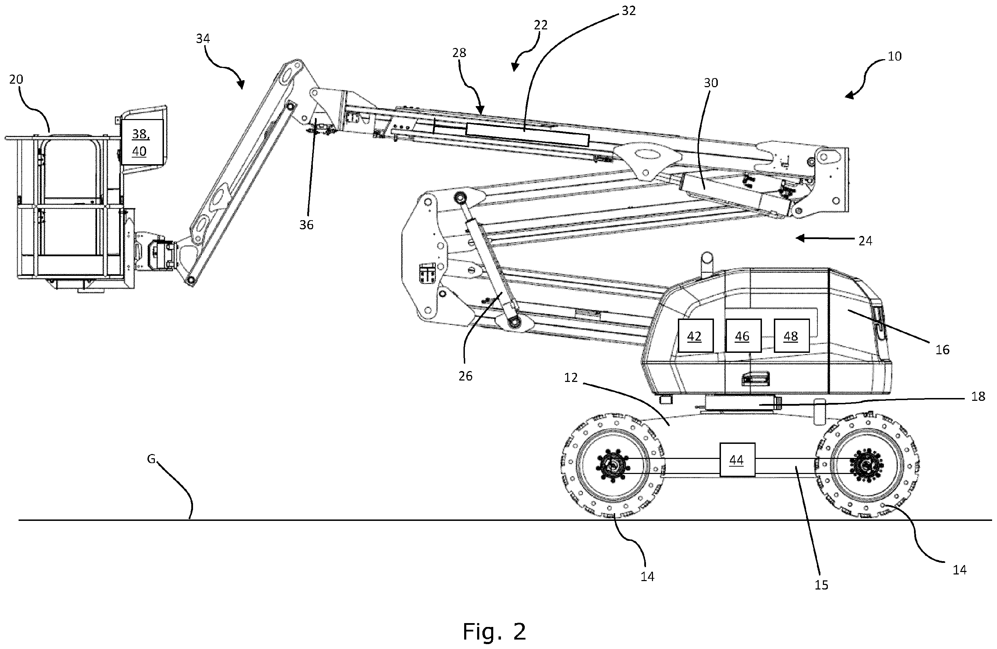

With reference to Figures 1 and 2, a working vehicle is indicated generally at 10. In the illustrated embodiment, the working vehicle 10 is a mobile elevated work platform. In alternative embodiments, the working vehicle is a different type of working vehicle (e.g. a telehandler, a backhoe loader, an excavator, a dumper, a skid-steer loader or the like).

The illustrated working vehicle 10 includes a chassis 12 with a driving arrangement for moving the working vehicle on a ground surface G. The driving arrangement may also be known as a ground-engaging propulsion structure. In the illustrated embodiment, the driving arrangement includes a plurality of wheels 14 (e.g. four wheels 14). In alternative embodiments, the driving arrangement has more or fewer than four wheels 14. In other embodiments, the driving arrangement includes tracks instead of wheels 14.

In the illustrated embodiment, the working vehicle 10 includes an electric traction motor 44 for driving the ground-engaging propulsion structure. The electric traction motor 44 drives the wheels 14 via a driveline arrangement 15 including one or more shafts and/or transmission components. The working vehicle 10 also includes a battery 46 for powering the electric traction motor 44. The electric traction motor 44, battery 46 and driveline arrangement 15 are shown schematically on Figures 1 and 2.

The working vehicle 10 has a superstructure 16 rotatably coupled to the chassis 12. A slewing motor 18 (e.g. an electric or hydraulic motor) is provided for rotating the superstructure 16 relative to the chassis 12.

The working vehicle 10 also has a basket 20 which is moveable relative to the superstructure 16 via a boom arrangement 22 coupled to the superstructure 16. The basket 20 is designed for receiving one or more people and/or objects (not shown). The working vehicle 10 is configured for moving the people and/or objects in the basket 20, via actuation of the boom arrangement 22, to a location remote from the ground surface G (e.g. an elevated location).

The boom arrangement 22 has an articulated boom arrangement 24 coupled to the superstructure 16, for raising the overall height of the boom arrangement 22. The articulated boom arrangement 24 is actuated by one or more articulated boom lifting actuators 26. In particular, extension of the articulated boom lifting actuator(s) 26 causes the articulated boom arrangement 24 to extend upwards, and retraction of the articulated boom lifting actuator(s) 26 causes the articulated boom arrangement 24 to retract downwards.

The boom arrangement 22 also includes a main boom 28 coupled to the articulated boom arrangement 24. The main boom 28 is actuated by a main boom lifting actuator 30. In particular, extension of the main boom lifting actuator 30 causes the main boom 28 to pivot upwards and retraction of the main boom lifting actuator 30 causes the main boom 28 to pivot downwards. The main boom 28 is of telescopic construction and a main boom extension actuator 32 is provided to control telescopic extension of the main boom 28.

The basket 20 is coupled to the main boom 28 via a jib boom arrangement 34. The working vehicle 10 is configured so that the jib boom arrangement 34 is pivotally coupled to the basket 20 and to the main boom 28. A levelling actuator 36 is provided so that the basket 20 remains substantially level regardless of the position of the main boom 28.

The illustrated mobile elevated work platform is of the kind commonly referred to as an "articulated boom" work platform but, in other embodiments, the mobile elevated work platform may be of the kind referred to as a "scissor lift", or another type of mobile elevated work platform. For example, in alternative embodiments, the working vehicle 10 has a different type of boom arrangement 22. For example: the main boom 28 may be connected directly to the basket 20 (i.e. the jib boom arrangement 34 may be omitted); the main boom 28 may be connected directly to the superstructure 16 (i.e. the articulated boom arrangement 24 may be omitted); the articulated boom arrangement 24 may be a scissor-type arrangement; the main boom 28 may not be telescopic; and/or the main boom 28 and jib boom arrangement 34 may be omitted and the basket 20 may be connected directly to the articulated boom arrangement 24.

The working vehicle 10 has various user controls 38 which can be activated by a user to control functions of the working vehicle 10. These user controls may be collocated on one or more control panels, as illustrated schematically on Figure 2. In the illustrated embodiment, the user controls 38 are positioned on the basket 20. However, at least some of the user controls 38 may be positioned on the chassis 12 and/or superstructure 16 in other embodiments.

In the illustrated embodiment, the user controls 38 include a traction input 40 to instruct driving of the wheels 14. For example, the traction input 40 may include a lever or joystick. Movement of the lever or joystick in a first direction may instruct driving of the wheels 14 to propel the working vehicle 10 forwards. Movement of the lever or joystick in a second direction may instruct driving of the wheels 14 to propel the working vehicle 10 backwards.

The user controls 38 may also include a steering input to instruct steering of at least one of the wheels 14.

As will be described in more detail below, the working vehicle 10 includes a controller 42 (shown schematically on Figures 1 and 2). The controller 42 may receive signals 39 from the user controls 38 in order to control operation of the working vehicle 10.

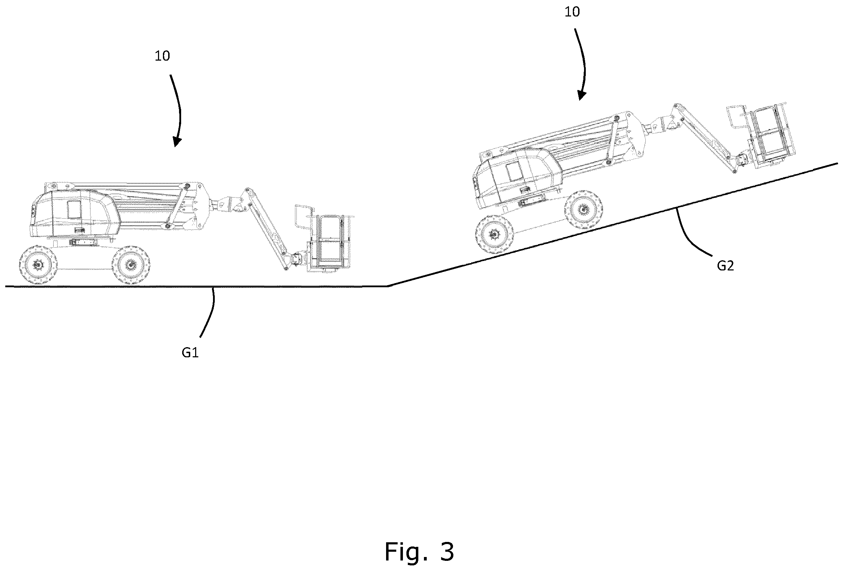

The user controls 38 may be operated to move the working vehicle 10 across the ground surface G. For example, Figure 3 illustrates the working vehicle 10 travelling on level ground G1, and on an uphill gradient G2. The user controls 38 may also be operated to move the basket 20 by actuating the boom arrangement 22.

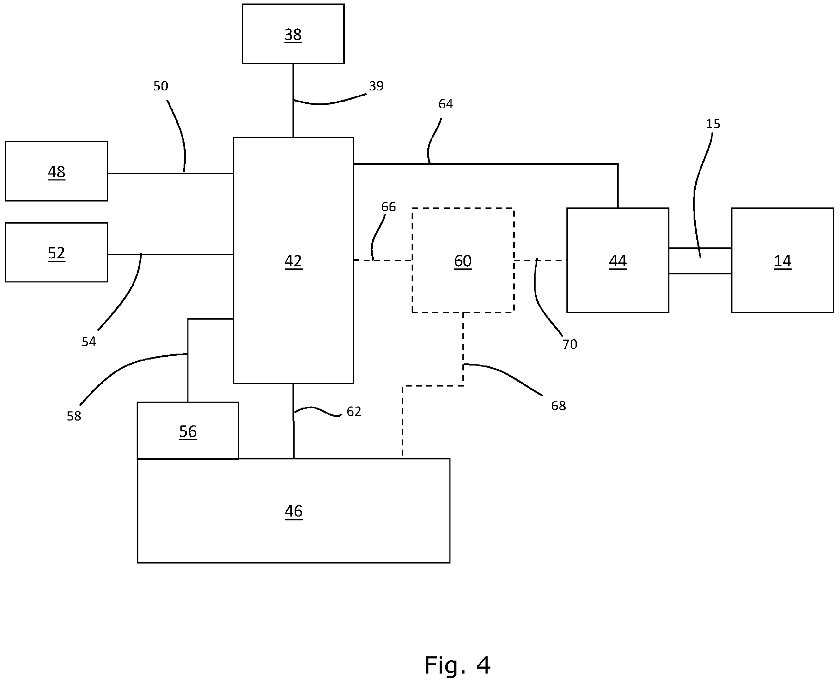

Referring now to Figure 4, the controller 42 of the working vehicle 10 and associated inputs and outputs are illustrated as a schematic diagram. The controller 42 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 42 may include an associated memory 52 or the memory may be located locally to the controller 42 or remotely. The memory 52 may be a non-volatile flash memory.

As will be described in more detail below, the controller 42 is configured to determine whether the working vehicle 10 is positioned on an uphill gradient (e.g., as illustrated at gradient G2 of Figure 3).

In the illustrated embodiment, the working vehicle 10 has a tilt sensor 48 configured to provide a tilt signal 50 to the controller 42 indicative of a tilt angle of the working vehicle 10. The controller 42 is configured to determine that the working vehicle 10 is positioned on an uphill gradient based on the tilt signal 50. For example, the controller 42 is configured to determine that the working vehicle 12 is positioned on an uphill gradient when the tilt angle indicated by the tilt signal 50 is greater than a tilt threshold. The tilt threshold may be in a range of about 0.5 degrees to about 30 degrees (e.g., in a range of about 4 degrees to about 22 degrees).

In some embodiments, the tilt sensor 48 includes an accelerometer. In such embodiments, the controller 42 may be configured to filter accelerometer data provided by the accelerometer to remove transient changes in the accelerometer data caused by vibration, impact or acceleration of the working vehicle 10. By filtering transient changes in the accelerometer data, a more accurate tilt angle can be determined.

In some embodiments, the tilt sensor 48 includes a vision system (e.g., camera and image processing device).

In some embodiments, the working vehicle 10 has a memory 52 containing a map of elevation data, and a positioning sensor (e.g., a GPS sensor) configured to indicate a position of the working vehicle 10 relative to the map. In such embodiments, the controller 42 may be configured to determine that the working vehicle 10 is positioned on an uphill gradient based on the position of the working vehicle 10 and the elevation data. For example, the map may include a road map (for on-road driving of the working vehicle) or a 3D building information model (for off-road driving of the working vehicle). In this context, a 3D building information model will be understood to mean a map containing 3D spatial information about a building and the surrounding area.

In some embodiments, the working vehicle 10 has a positioning sensor (e.g., a GPS sensor) and the controller 42 is configured to determine that the working vehicle 10 is positioned on an uphill gradient based on a change in elevation of the working vehicle 10 over a given distance or time period.

In some embodiments, the controller 42 is configured to monitor power consumption of the electric traction motor 44 and to determine that the working vehicle 10 is travelling on an uphill gradient based on the power consumption and speed and/or acceleration of the working vehicle 10. For example, when the working vehicle 10 is travelling at a given speed on an uphill gradient, power consumption of the electric traction motor 44 would be higher than when the working vehicle 10 is travelling at the same speed on flat ground or a downhill gradient. This principle could be used to determine when the working vehicle 10 is travelling on an uphill gradient based on the power consumption of the electric traction motor 44 and the speed and/or acceleration of the working vehicle 10.

In some embodiments, the working vehicle 10 has a manually-actuatable uphill drive mode input (e.g., as one of the user controls 38). In such embodiments, the controller 42 may be configured to determine that the working vehicle 10 is positioned on an uphill gradient when the manually-actuatable uphill drive mode input is activated.

In alternative embodiments, any other suitable means for determining that the working vehicle 10 is positioned on an uphill gradient may be used.

The controller 42 is also configured to determine whether a state of charge of the battery 46 is below a charge threshold. In particular, the working vehicle 10 has a battery state of charge sensor 56 configured to provide a battery charge signal 58 to the controller 42 indicative of the state of charge of the battery 46. For example, the battery state of charge sensor 56 may be configured to measure a voltage of the battery 46, and to send the measured voltage to the controller 42 as the battery charge signal 58.

When it is determined that the working vehicle 10 is positioned on an uphill gradient and the state of charge is below the charge threshold, the controller 42 is configured to limit a power consumption of the electric traction motor 44 to a restricted power consumption which is less than a maximum power consumption of the electric traction motor 44. For example, the controller 42 is configured to limit power input to the electric traction motor 44 from the battery 46 to a restricted power input level which is less than a maximum power input of the electric traction motor 44. For example, the controller 42 is configured to de-rate the electric traction motor 44.

It will be understood that spikes and high levels of power consumption in the electric traction motor 44 may cause dips in battery voltage level. When the state of charge of the battery 46 is low, the battery voltage will already be lower, and any further dips in battery voltage level may lead to an undervoltage event which may cause the electric traction motor 44 and/or controller 42 and/or other electric circuitry to malfunction and/or shut down. It will also be understood that the electric traction motor 44 is more likely to have high power consumption levels which could lead to such an undervoltage event when travelling uphill. Therefore, by limiting power consumption of the electric traction motor 44 when the working vehicle 10 is positioned on an uphill gradient and state of charge is below a charge threshold, the likelihood of such an undervoltage event occurring is reduced. This may protect the electric traction motor 44 and/or controller 42 and/or other electric circuitry from damage, as well as lead to a more reliable operation of the working vehicle 10 on uphill gradients.

The controller 42 may directly control the supply of power from the battery 46 to the electric traction motor 44. For example, power may be directed from the battery 46 along a first power cable 62 to the controller 42, then along a second power cable 64 from the controller 42 to the electric traction motor 44. In such an embodiment, the controller 42 may incorporate an inverter (e.g., when the electric traction motor 44 is an AC motor).

Alternatively, the controller 42 may output a control signal 66 to another component to control the supply of power from the battery 46 to the electric traction motor 44. For example, as illustrated in dashed lines on Figure 4, the control signal 66 may be sent to an inverter 60 which is connected to the battery 46 via a third power cable 68. The inverter 60 may direct power received via the third power cable 68 to the electric traction motor 44 via a fourth power cable 70.

In some embodiments, the controller 42 is configured to set a speed demand of the working vehicle 10 in order to control operation of the electric traction motor 44. For example, the speed demand may be indicative of a desired rotation speed of the electric traction motor 44 and/or a desired travelling speed of the working vehicle 10. The speed demand may be an internal value used by the controller 42 (e.g., to control power sent from the battery 46 to the electric traction motor 44 along the second power cable 64). Alternatively, the speed demand may be sent directly as an output signal (e.g., as the control signal 66 sent to the inverter 60, which uses the speed demand signal 66 to control power supplied from the battery 46 to the electric traction motor 44 via the fourth power cable 70). In either case, feedback control may be used to control the electric traction motor 44 to achieve the demanded speed (e.g., using a feedback signal from a speedometer of the working vehicle 10).

In some embodiments, the speed demand may be set based on the traction input 40 of the user controls 38. For example, where the traction input 40 is a lever which is deflectable from a normal position, the speed demand may be proportional to the deflection of the lever relative to the normal position (i.e., with a greater deflection corresponding to a greater speed demand).

In some embodiments, the controller 42 is configured to limit the speed demand of the working vehicle 10 to a restricted speed demand which is less than a maximum speed demand in order to restrict the power consumption of the electric traction motor 44. For example, the restricted speed demand may be in a range of about 10% to about 90% of the maximum speed demand.

In some embodiments, the controller 42 is configured to control the restricted speed demand to limit sudden changes in the speed demand. For example, the controller 42 may be configured to apply a low pass filter to smooth out step changes in speed demand (e.g., as a result of step changes in the position of the traction input 40). It will be understood that sudden changes in the speed demand may lead to spikes in acceleration and associated spikes in power consumption of the electric traction motor 44. Therefore, by controlling the restricted speed demand to limit sudden changes in the speed demand, such spikes in power consumption may be avoided.

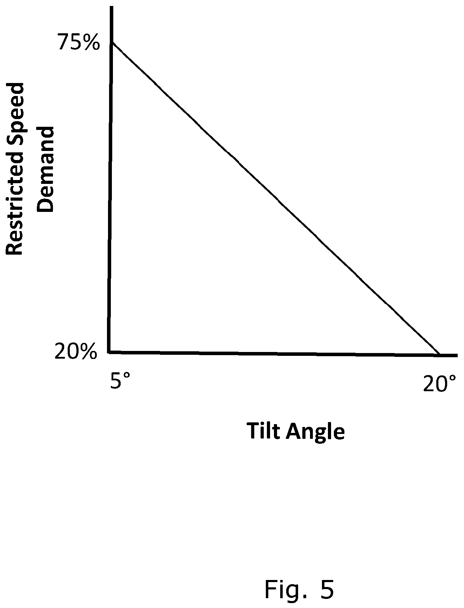

In some embodiments, the controller 42 may be configured to decrease the restricted speed demand as a tilt angle of the working vehicle 10 increases (e.g., as illustrated in Figure 5). In particular, the controller 42 may be configured to vary the restricted speed demand between a first speed limit when the tilt angle is at or above an upper tilt threshold, and a second speed limit when the tilt angle is at or above a lower tilt threshold.

The controller 42 may be configured to set no restriction on the speed demand when the tilt angle is below the lower tilt threshold. In this way, unnecessary restriction of the speed demand may be avoided.

The first speed limit may be in a range of about 10% to about 30% of the maximum speed demand. For example, in Figure 5 the first speed limit is around 20% of the maximum speed demand.

The second speed limit may be in a range of about 60% to about 90% of the maximum speed demand. For example, in Figure 5 the second speed limit is around 75% of the maximum speed demand.

The upper tilt threshold may be in a range of about 15 degrees to about 30 degrees (e.g., in a range of about 20 degrees to about 25 degrees). For example, in Figure 5 the upper tilt threshold is around 20 degrees.

The lower tilt threshold may be in a range of about 0.5 degrees to about 10 degrees (e.g., in a range of about 2 degrees to about 7 degrees). For example, in Figure 5 the lower tilt threshold is around 5 degrees.

As illustrated in Figure 5, the controller 42 may be configured to gradually decrease the restricted speed demand as the tilt angle varies from the lower tilt threshold to the upper tilt threshold. For example, the restricted speed demand may decrease gradually (e.g., linearly) from the second speed limit to the first speed limit. This facilitates an appropriate level of restriction on the speed demand between the lower and upper tilt thresholds. For example, this facilitates a level of restriction which avoids undervoltage without being overly restrictive at different tilt angles between the lower and upper tilt thresholds.

In some embodiments, the charge threshold is in a range of about 20% to about 70% of a maximum state of charge of the battery 46 (e.g., in a range of about 30% to about 60% of the maximum state of charge, e.g., in a range of about 40% to about 50% of the maximum state of charge). This may offer a suitable level at which the restricted power consumption is applied. For example, this may avoid restriction of power consumption at high state of charge levels (e.g., over 70%) at which the likelihood of an undervoltage event is low. This may also ensure that restriction of power consumption is implemented sufficiently early enough (e.g., at least by 20% state of charge) to reduce the likelihood of an undervoltage event occurring.

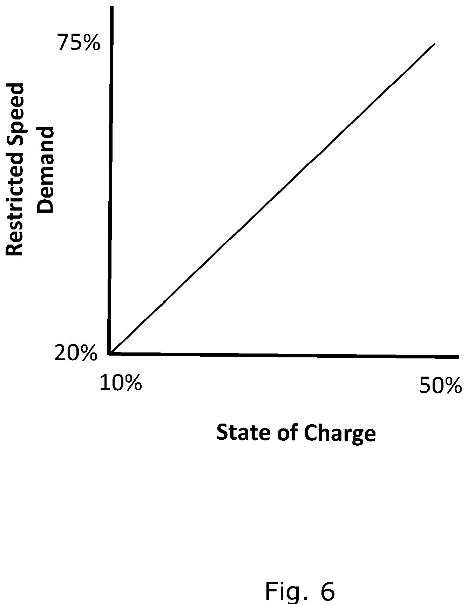

In some embodiments, the controller 42 may be configured to decrease the restricted speed demand as the state of charge of the battery 46 decreases (e.g., as illustrated in Figure 6). For example, as the state of charge of the battery 46 drops further below the charge threshold, more restriction is placed on speed demand. It will be understood that battery voltage will decrease as the state of charge decreases below the charge threshold. Therefore, the risk of battery voltage dipping to an undervoltage level at a given speed demand increases as the state of charge decreases further. By decreasing the restricted speed demand as the state of charge of the battery 46 decreases below the charge threshold, the risk of an undervoltage event is reduced at lower state of charge levels.

In Figure 6, the charge threshold is around 50%. As the state of charges decreases below this threshold, the restricted speed demand decreases (e.g., from around 75% at the 50% charge threshold, to around 20% at 10% state of charge).

In some embodiments, there may be a battery cut-off threshold below which the working vehicle 10 shuts down. For example, in Figure 6, the battery cut-off threshold is around 10% of the maximum state of charge.

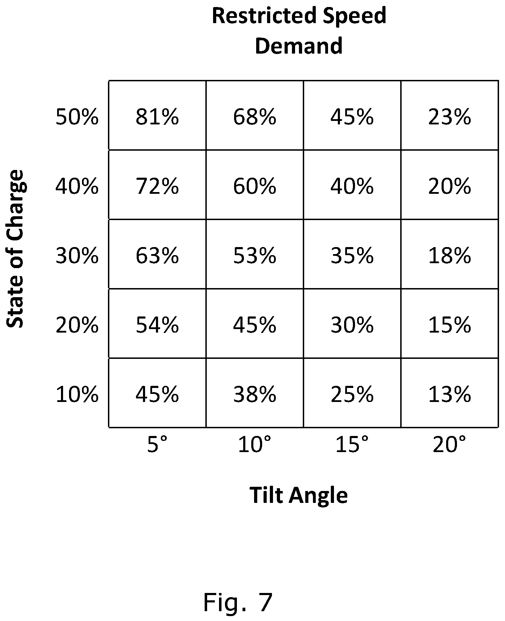

In some embodiments, the controller 42 is configured to set the restricted speed demand based on the state of charge of the battery and the tilt angle of the working vehicle 10 (e.g., as illustrated in Figure 7). It will be understood that lower states of charge and higher tilt angles both increase the risk of battery voltage dipping below a required level. Therefore, by setting the restricted speed demand based on both of these properties, rather than just one property, the risk of an undervoltage event occurring is reduced.

The controller 42 may be configured to set the restricted speed demand using a 2D lookup table. For example, Figure 7 illustrates a 2D lookup table which includes restricted speed demand values for different state of charge levels and tilt angles. Where the state of charge and/or tilt angle does not correspond exactly to the values in the 2D lookup table, the controller 42 may round up or down to the closest value in order to select the appropriate restricted speed demand. Alternatively, the controller 42 may use interpolation to determine a restricted speed demand between the two closest values in the table.

In other embodiments, the controller 42 may be configured to set the restricted speed demand using a 2D function. For example, the 2D function may include a tilt component (e.g., a value between 0 and 100%) and a charge component (e.g. a value between 0 and 100%). The tilt component and charge component may be multiplied together to determine the restricted speed demand. In some embodiments, the tilt component is weighted before multiplying with the charge component. In some embodiments, the charge component is weighted before multiplying with the tilt component. In some embodiments, both the tilt component and charge component are weighted before multiplying together. Alternatively, a different mathematical function may be applied to the tilt component and charge component.

The tilt component may be set based on a function of the tilt angle (e.g., a linear function, as illustrated in Figure 5). Similarly, the charge component may be set based on a function of the state of charge (e.g., a linear function, as illustrated in Figure 6).

Although the description above outlines how the controller 42 is configured to limit power consumption of the electric traction motor 44 by setting a restricted speed demand, it will be understood that in other embodiments the controller 42 may limit power consumption of the electric traction motor 44 in a different way. For example, the controller 42 may set a restriction on another property instead of speed demand (e.g. acceleration) in order to limit power consumption of the electric traction motor 44. Alternatively, the controller 42 may directly set the restricted power consumption of the electric traction motor 44 (e.g., by limiting power directed from the battery 46 to the electric traction motor 44 via the controller 42 and/or inverter 60).

In such alternative embodiments, the controller 42 may set the restriction using similar logic to that used to set the restricted speed demand described above. For example, the restricted power consumption may be in a range of about 10% to about 90% of the maximum power consumption of the electric traction motor 44.

The controller 42 may be configured to decrease the restricted power consumption as a tilt angle of the working vehicle increases (e.g., similar to the relationship illustrated in Figure 5). The controller 42 may be configured to vary the restricted power consumption between a first consumption limit when the tilt angle is at or above an upper tilt threshold, and a second consumption limit when the tilt angle is at or above a lower tilt threshold (e.g., similar to the relationship illustrated in Figure 5). The controller 42 may be configured to set no restriction on the power consumption of the electric traction motor 44 when the tilt angle is below the lower tilt threshold. The first consumption limit may be in a range of about 10% to about 30% of the maximum power consumption. The second consumption limit may be in a range of about 60% to about 90% of the maximum power consumption. The upper tilt threshold may be in a range of about 15 degrees to about 30 degrees, e.g., in a range of about 20 degrees to about 25 degrees. The lower tilt threshold may be in a range of about 0.5 degrees to about 10 degrees, e.g., in a range of about 2 degrees to about 7 degrees. The controller 42 may be configured to gradually (e.g., linearly) decrease the restricted power consumption as the tilt angle varies from the lower tilt threshold to the upper tilt threshold.

The controller 42 may be configured to decrease the restricted power consumption as the state of charge of the battery 46 decreases (e.g., similar to the relationship illustrated in Figure 6).

The controller 42 may be configured to set the restricted power consumption based on the state of charge of the battery 46 and the tilt angle of the working vehicle 10, for example, using a 2D function or a 2D lookup table (e.g., similar to the 2D lookup table illustrated in Figure 7). The 2D function may include a tilt component (e.g., a value between 0 and 100%) and a charge component (e.g. a value between 0 and 100%). The tilt component and charge component may be multiplied together to determine the restricted power consumption. In some embodiments, the tilt component is weighted before multiplying with the charge component. In some embodiments, the charge component is weighted before multiplying with the tilt component. In some embodiments, the tilt component and charge component may be weighted before multiplying together. Alternatively, a different mathematical function may be applied to the tilt component and charge component. The tilt component may be set based on a function of the tilt angle (e.g., a linear function, similar to the relationship illustrated in Figure 5). The charge component may be set based on a function of the state of charge (e.g., a linear function, similar to the relationship illustrated in Figure 6).

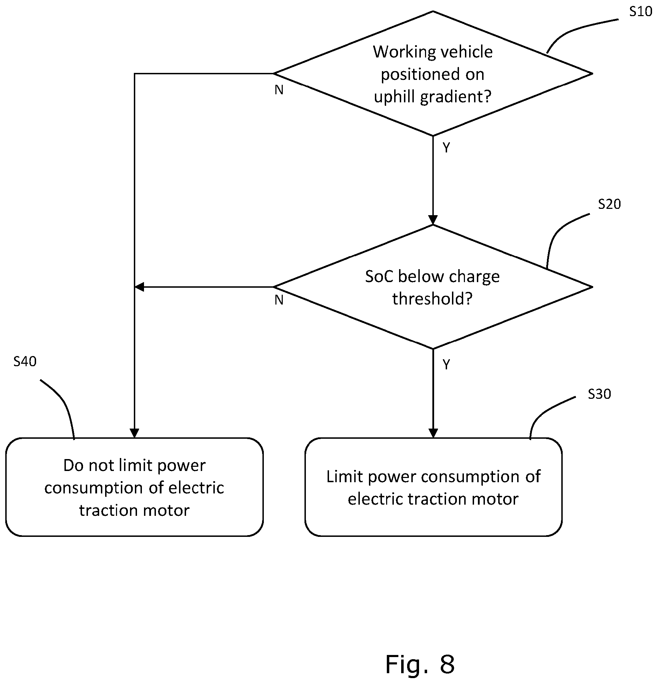

Referring now to Figure 8, a method of controlling power consumption of an electric traction motor 44 of a working vehicle 10 is illustrated as a flow chart. The method comprises the following steps:
a) determining whether the working vehicle 10 is positioned on an uphill gradient (at step S10);
b) determining whether a state of charge of a battery 46 of the working vehicle 10 is below a charge threshold (at step S20); and
c) when it is determined that the working vehicle 10 is positioned on an uphill gradient and the state of charge is below the charge threshold, limiting a power consumption of the electric traction motor 44 to a restricted power consumption which is less than a maximum power consumption of the electric traction motor 44 (at step S30).

For example, at step c) the method involves limiting power input to the electric traction motor 44 from the battery 46 (e.g., via a controller 42) to a restricted power input level which is less than a maximum power input of the electric traction motor 44. For example, at step c) the method involves de-rating the electric traction motor 44.

As illustrated in Figure 8, when it is determined that the working vehicle 10 is not positioned on an uphill gradient and/or that the state of charge is not below the charge threshold, the method may involve, at step S40, not limiting power consumption of the electric traction motor 44 (i.e., placing no restriction on power consumption of the electric traction motor 44).

In some embodiments, step c) involves limiting a speed demand of the working vehicle 10 to a restricted speed demand which is less than a maximum speed demand in order to restrict the power consumption of the electric traction motor 44. In some embodiments, the speed demand is indicative of a desired rotation speed of the electric traction motor 44 and/or a desired travelling speed of the working vehicle 10. In some embodiments, the restricted speed demand is in a range of about 10% to about 90% of the maximum speed demand.

In some embodiments, the method involves decreasing the restricted speed demand as a tilt angle of the working vehicle 10 increases. For example, the method may involve varying the restricted speed demand between a first speed limit when the tilt angle is at or above an upper tilt threshold, and a second speed limit when the tilt angle is at or above a lower tilt threshold. In some embodiments, the method involves setting no restriction on the speed demand when the tilt angle is below the lower tilt threshold. In some embodiments, the first speed limit is in a range of about 10% to about 30% of the maximum speed demand. In some embodiments, the second speed limit is in a range of about 60% to about 90% of the maximum speed demand. In some embodiments, the upper tilt threshold is in a range of about 15 degrees to about 30 degrees, e.g., in a range of about 20 degrees to about 25 degrees. In some embodiments, the lower tilt threshold is in a range of about 0.5 degrees to about 10 degrees, e.g., in a range of about 2 degrees to about 7 degrees. In some embodiments, the method involves gradually decreasing the restricted speed demand as the tilt angle varies from the lower tilt threshold to the upper tilt threshold.

In some embodiments, the method involves controlling the restricted speed demand to limit sudden changes in the speed demand.

In some embodiments, the method involves decreasing the restricted speed demand as the state of charge of the battery 46 decreases.

In some embodiments, the method involves setting the restricted speed demand based on the state of charge of the battery 46 and the tilt angle of the working vehicle 10. For example, the method may involve setting the restricted speed demand using a 2D function or a 2D lookup table. The 2D function may comprise a tilt component (e.g., a value between 0 and 100%) and a charge component (e.g. a value between 0 and 100%). The tilt component and charge component may be multiplied together to determine the restricted speed demand. In some embodiments, the tilt component is weighted before multiplying with the charge component. In some embodiments, the charge component is weighted before multiplying with the tilt component. In some embodiments, the tilt component and charge component may be weighted before multiplying together. Alternatively, a different mathematical function may be applied to the tilt component and charge component. The tilt component may be set based on a function (e.g., a linear function) of the tilt angle. The charge component may be set based on a function (e.g., a linear function) of the state of charge.

In some embodiments, the method may involve directly setting the restricted power consumption, or setting a restriction on another property instead of speed demand (e.g. acceleration) in order to limit power consumption.

In some embodiments, the charge threshold is in a range of about 20% to about 70% of a maximum state of charge of the battery 46, e.g., in a range of about 30% to about 60% of the maximum state of charge, e.g., in a range of about 40% to about 50% of the maximum state of charge.

In some embodiments, the method involves determining that the working vehicle 10 is positioned on an uphill gradient based on a tit signal from a tilt sensor. For example, the method may involve determining that the working vehicle 10 is positioned on an uphill gradient when the tilt angle is greater than a tilt threshold. The tilt threshold may be in a range of about 0.5 degrees to about 30 degrees, e.g., in a range of about 4 degrees to about 22 degrees.

In some embodiments, the method involves filtering data provided by the tilt sensor to remove transient changes caused by vibration, impact or acceleration of the working vehicle 10.

In some embodiments, the method involves determining that the working vehicle 10 is positioned on an uphill gradient based on the position of the working vehicle 10 relative to a map of elevation data.

In some embodiments, the method involves determining that the working vehicle 10 is positioned on an uphill gradient based on a change in elevation of the working vehicle 10 over a given distance.

In some embodiments, the method involves monitoring power consumption of the electric traction motor 44 and determining that the working vehicle 10 is travelling on an uphill gradient based on the power consumption and speed and/or acceleration of the working vehicle 10.

In some embodiments, the method involves determining that the working vehicle 10 is positioned on an uphill gradient when a manually-actuatable uphill drive mode input is activated.

The one or more embodiments are described above by way of example only and it will be appreciated that the variations are possible without departing from the scope of protection afforded by the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A working vehicle comprising:
a ground-engaging propulsion structure;
an electric traction motor for driving the ground-engaging propulsion structure;
a battery for powering the electric traction motor; and
a controller configured to:
a) determine whether the working vehicle is positioned on an uphill gradient;
b) determine whether a state of charge of the battery is below a charge threshold; and
c) when it is determined that the working vehicle is positioned on an uphill gradient and the state of charge is below the charge threshold, limit a power consumption of the electric traction motor to a restricted power consumption which is less than a maximum power consumption of the electric traction motor.

2. The working vehicle of claim 1, wherein the controller is configured to limit a speed demand of the working vehicle to a restricted speed demand which is less than a maximum speed demand in order to restrict the power consumption of the electric traction motor; optionally, wherein the speed demand is indicative of a desired rotation speed of the electric traction motor and/or a desired travelling speed of the working vehicle; and/or optionally, wherein the restricted speed demand is in a range of about 10% to about 90% of the maximum speed demand.

3. The working vehicle of claim 2, wherein the controller is configured to decrease the restricted speed demand as a tilt angle of the working vehicle increases.

4. The working vehicle of claim 3, wherein the controller is configured to vary the restricted speed demand between a first speed limit when the tilt angle is at or above an upper tilt threshold, and a second speed limit when the tilt angle is at or above a lower tilt threshold; optionally, wherein the controller is configured to set no restriction on the speed demand when the tilt angle is below the lower tilt threshold.

5. The working vehicle of claim 4, wherein the first speed limit is in a range of about 10% to about 30% of the maximum speed demand; and/or wherein the second speed limit is in a range of about 60% to about 90% of the maximum speed demand.

6. The working vehicle of claim 4 or 5, wherein the upper tilt threshold is in a range of about 15 degrees to about 30 degrees, optionally in a range of about 20 degrees to about 25 degrees; and/or wherein the lower tilt threshold is in a range of about 0.5 degrees to about 10 degrees, optionally in a range of about 2 degrees to about 7 degrees.

7. The working vehicle of any of claims 4 to 6, wherein the controller is configured to gradually decrease the restricted speed demand as the tilt angle varies from the lower tilt threshold to the upper tilt threshold.

8. The working vehicle of any of claims 2 to 7, wherein the controller is configured to control the restricted speed demand to limit sudden changes in the speed demand.

9. The working vehicle of any of claims 2 to 8, wherein the controller is configured to decrease the restricted speed demand as the state of charge of the battery decreases; and/or wherein the controller is configured to set the restricted speed demand based on the state of charge of the battery and a tilt angle of the working vehicle; optionally, wherein the controller is configured to set the restricted speed demand using a 2D function or a 2D lookup table.

10. The working vehicle of any preceding claim, wherein the charge threshold is in a range of about 20% to about 70% of a maximum state of charge of the battery; optionally, in a range of about 30% to about 60% of the maximum state of charge; optionally, in a range of about 40% to about 50% of the maximum state of charge.

11. The working vehicle of any preceding claim, wherein the working vehicle comprises a tilt sensor configured to provide a tilt signal to the controller indicative of a tilt angle of the working vehicle, wherein the controller is configured to determine that the working vehicle is positioned on an uphill gradient based on the tilt signal; optionally, wherein the controller is configured to determine that the working vehicle is positioned on an uphill gradient when the tilt angle is greater than a tilt threshold and wherein the tilt threshold is in a range of about 0.5 degrees to about 30 degrees, optionally in a range of about 4 degrees to about 22 degrees.

12. The working vehicle of claim 11, wherein the tilt sensor comprises an accelerometer; optionally, wherein the controller is configured to filter accelerometer data provided by the accelerometer to remove transient changes in the accelerometer data caused by vibration, impact or acceleration of the working vehicle.

13. The working vehicle of any preceding claim, wherein the working vehicle is a mobile elevated work platform.

14. A controller for a working vehicle, wherein the controller is configured to:
a) determine whether the working vehicle is positioned on an uphill gradient;
b) determine whether a state of charge of a battery of the working vehicle is below a charge threshold; and
c) when it is determined that the working vehicle is positioned on an uphill gradient and the state of charge is below the charge threshold, limit a power consumption of an electric traction motor of the working vehicle to a restricted power consumption which is less than a maximum power consumption of the electric traction motor.

15. A method of controlling power consumption of an electric traction motor of a working vehicle, the method comprising:
a) determining whether the working vehicle is positioned on an uphill gradient;
b) determining whether a state of charge of a battery of the working vehicle is below a charge threshold; and
c) when it is determined that the working vehicle is positioned on an uphill gradient and the state of charge is below the charge threshold, limiting a power consumption of the electric traction motor to a restricted power consumption which is less than a maximum power consumption of the electric traction motor.
